# EUROPEAN PATENT APPLICATION

(11) **EP 1 698 298 A1**
(43) Date of publication of application: **06.09.2006**
(21) Application number: 05004440.3
(22) Date of filing: 01.03.2005
(51) Int. Cl.: A61C 5/02, A61C 5/04

(54) **Device for facilitating precision cutting of dental pins, measuring endodontic dimensions**

(71) Applicant: Presta, Antonio, 48100 Ravenna (IT)
(72) Inventor: The designation of the inventor has not yet been filed
(74) Representative: Modiano, Micaela Nadia

(57) **Abstract**

A device for facilitating the precision cutting of dental pins, the measurement of endodontic dimensions and the consequent adaptation of root canal instruments, which comprises at least three elements, one which is similar to an inverted cup (2) and is closed downward by insertion in a tray or base in order to form a chamber for collecting and/or aspirating the cutting residues, and is mostly inserted, in an upper region, in an additional inverted cup (1), the bottoms of the two cups being preset so that by arranging them mutually adjacent they can clamp and lock a dental pin (P) that is arranged transversely with respect to cutouts provided in the two bottoms for the passage of a cutter (F1), by means of which the pin is to be cut to a chosen length, a graduated scale (2G) in which the zero value coincides with the cut of the cutter being reproduced thereon on one or both bottoms.

## Description

The present invention relates to a device to be used in dentists' offices for precisely and safely cutting, by way of cutters that are currently in use, standard dental pins, since said pins, made of carbon fiber or other suitable material, after being chosen according to the most appropriate cross-section, have to be cut according to the length measured at that moment by means of an endodontic probe.

These are in fact pins which are subsequently inserted and cemented in a natural or artificial root and must allow the anchoring and support of so-called abutments, which are made of composite material and incorporate the portion of the pin that protrudes, or is intended to protrude, from the root, and constitute the support for fixed prostheses or crowns to be retained with the aid of specific adhesives.

At present, such pins are cut roughly by holding them between two fingers or even inside the mouth of the patient, obviously after cementing them in the root.

Apart from the inaccuracy of the cut thus performed and the rather frequent need for subsequent corrections, this method entails several drawbacks, such as the scattering of fragments and most of all of contaminating dust, which can also be easily inhaled, as well as the possibility of touching and dirtying, despite wearing gloves, the surface of the pins that should remain free from contamination until cementing occurs.

The aim of the present invention is to solve these drawbacks with a device that is easy to provide and even easier to use, and in which there are also at least two graduated scales, one for measuring the actual length detected with the endodontic probe and the other for positioning the pin so as to cut it to the intended size.

In some cases, there are also holes in order to check the diameter of the pins and there is a graduated scale by way of which the device is preset to adapt the length of the root canal instruments.

The device is further provided with a coupling for the suction system that is already present in any dentist's office for the various drainage applications and by means of which dispersion of the dust and small fragments generated by the cutting operation is avoided.

Another object of the present invention is to allow, during endodontic therapy, rapid and correct adaptation of root canal instruments according to the length detected by the endodontic probe.

This aim and these and other objects that will become better apparent hereinafter are achieved by a device according to claim 1.

Further characteristics and advantages of the present invention will become better apparent from the following detailed description of preferred embodiments of the device according to the invention, illustrated by way of non-limiting example in the accompanying drawings, wherein:
Figure 1 is a cutout front elevation view of a first embodiment of the invention during the cutting of a dental pin by means of a circular cutter;
Figures 2, 3 and 4, referred to Figure 1, are respectively a vertical sectional view taken along the line X-X, a top view and a side view;
Figures 5, 6, 7 and 8 are respectively a cutout front view, a side view, a bottom view and a sectional view taken along the line X-X of a first element of the device of Figures 1, 2, 3 and 4;
Figures 9, 10 and 11 are respectively a side view, a cutout front view and a top view of a second element of the device shown in Figures 1, 2, 3 and 4;
Figure 12 is a cutout side view of a third element of the device of Figures 1, 2, 3 and 4;
Figure 13 is a side view of the hollow pin for connecting the device shown in Figures 1, 2, 3 and 4 to the suction system;
Figure 14 is a cutout front elevation view of a second embodiment of the invention for cutting dental pins by means of a cylindrical cutter;
Figures 15, 16 and 17, referred to Figure 14, are respectively a vertical sectional view taken along the line Y-Y, a top view and a side view, taken during the cutting of a dental pin by means of a cylindrical cutter;
Figures 18, 19, 20 and 21 are respectively a front cutout view, a side view, a bottom view and a sectional view taken along the line Y-Y of a first element of the device shown in Figures 14, 15, 16 and 17;
Figures 22, 23 and 24 are respectively a side view, a cutout front view and a top view of a second element of the device shown in Figures 14, 15, 16 and 17;
Figure 25 is a cutout side view of a third element of the device of Figures 14, 15, 16 and 17;
Figure 26 is a side view of the hollow pin for connecting the device of Figures 14, 15, 16 and 17 to the suction system;
Figure 27 is a front elevation view of a third embodiment of the invention during the cutting of a dental pin by means of a circular cutter;
Figures 28, 29 and 30, referred to Figure 27, are respectively a vertical sectional view taken along the line Z-Z, a top view and a rear view;
Figures 31, 32, 33 and 34 are respectively a side view, a front view, a top view and a sectional view taken along the line Z-Z of a first element of the device shown in Figures 27, 28, 29 and 30;
Figures 35, 36, 37 and 38 are respectively a side view, a front view, a top view and a sectional view taken along the line Z-Z of a second element of the device shown in Figures 27, 28, 29 and 30;
Figure 39 is a front elevation view of a fourth embodiment of the invention for cutting dental pins by means of a cylindrical cutter;
Figures 40, 41 and 42, referred to Figure 39, are respectively a vertical sectional view taken along the line W-W, a top view and a rear view during the cutting of a dental pin by means of a cylindrical cutter;
Figures 43, 44, 45 and 46 are respectively a front view, a side view, a top view and a sectional view taken along the line W-W of a first element of the device shown in Figures 39, 40, 41 and 42;
Figures 47, 48, 49 and 50 are respectively a front view, a sectional view taken along the line W-W, a top view and a side view of a second element of the device shown in Figures 39, 40, 41 and 42.

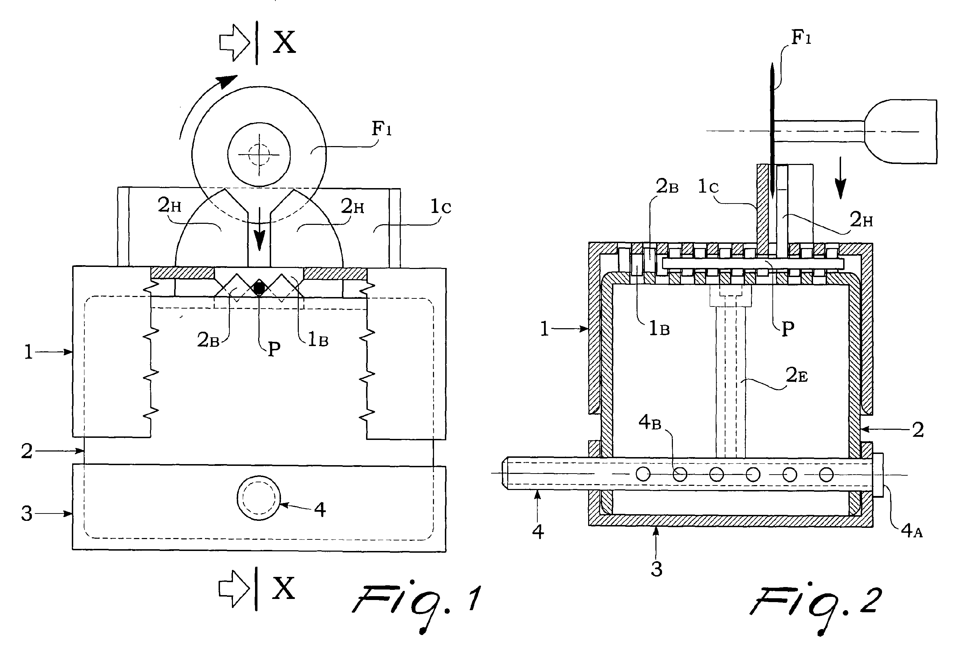

By examining the accompanying figures and starting from the one that show, in drawings 1-2-3-4, a device that can be used to cut a dental pin P with a circular cutter F 1 of a known type (Figures 1 and 2), it can be seen that the pin P is clamped, during cutting, between cups 1 and 2, which are inserted in each other.

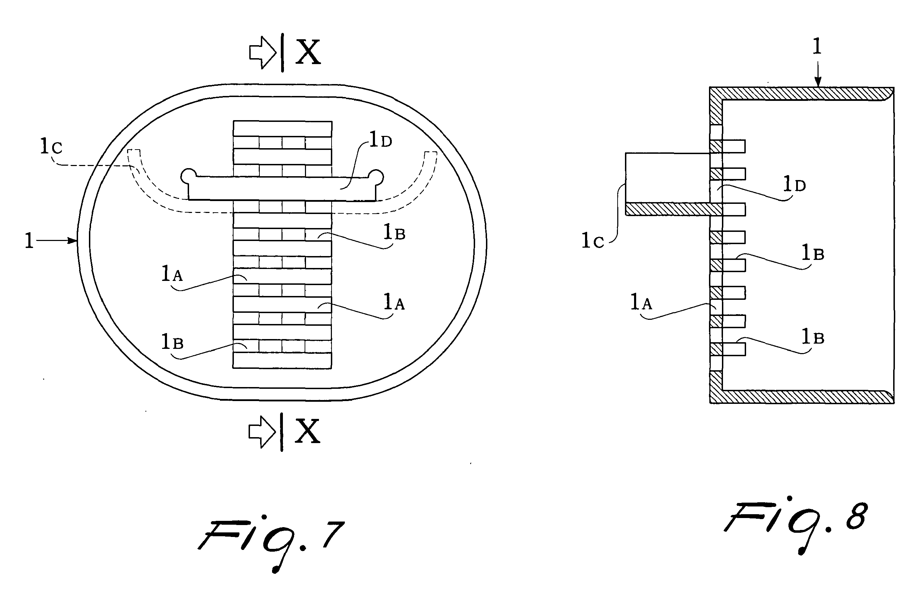

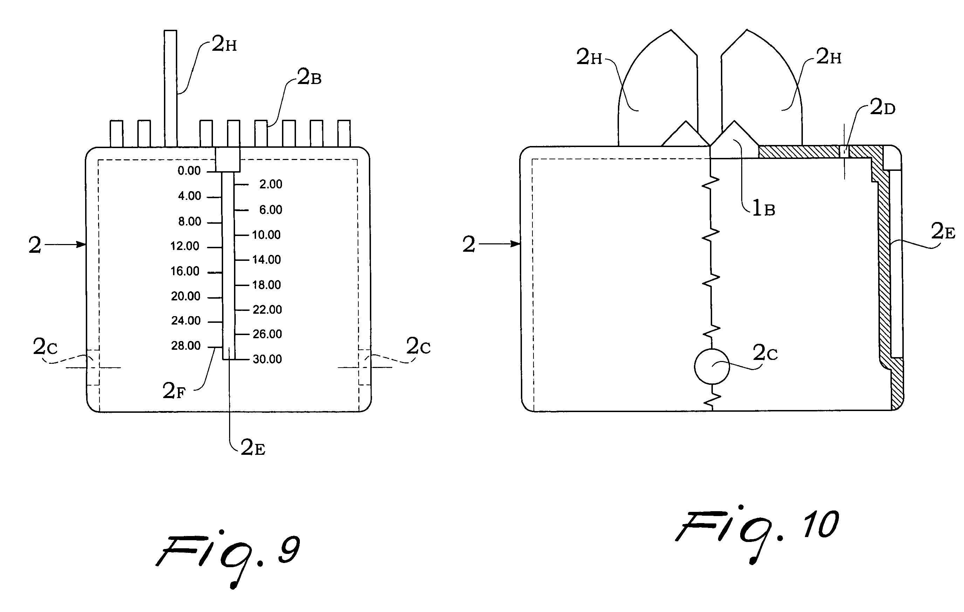

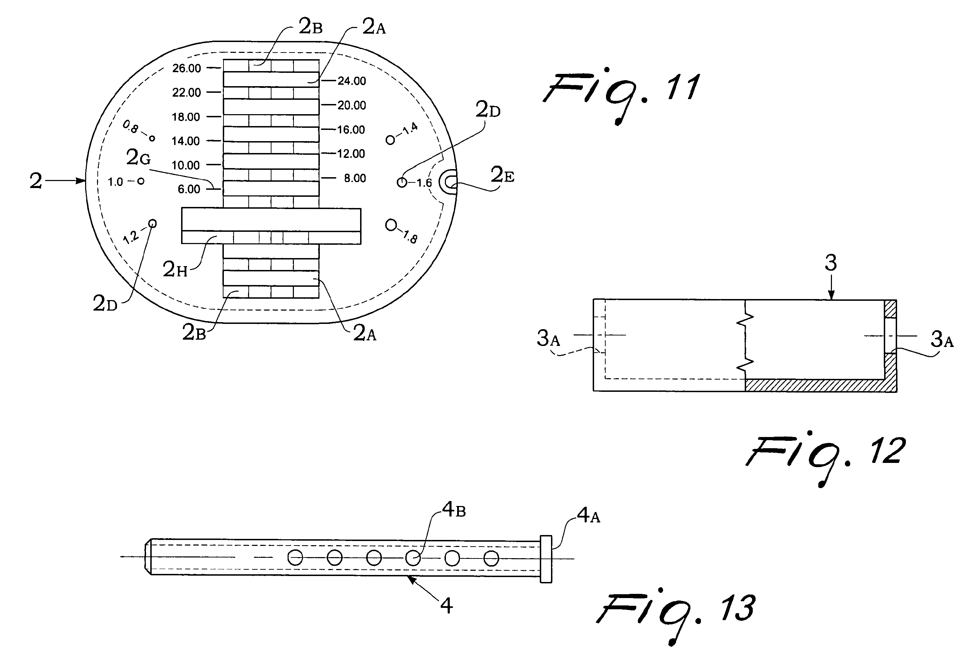

Each one of the cups in fact has, on its bottom, a plurality of parallel rectangular openings, which are designated by the reference numeral 1A in the cup 1 (Figures 7 and 8) and by the reference numeral 2A in the cup 2 (Figure 11), are mutually offset and alternated respectively with pairs of protrusions 1B and 2B which, since the first of said pairs protrude into the cup 1 and at the openings 2A of the underlying cup 2, from which instead the pairs of protrusions 2B protrude outward and at the openings 1A of the overlying cup 1, form two rows of mutually opposite saddle-shaped regions, the mutual approach of which, obtained by clamping the assembly with two fingers after fitting the cup 1 over the cup 2 and after positioning the pin P between the protrusions 2B that are external to the cup 2, allows to firmly grip the pin P during cutting, regardless of its cross-section, by way of the angular configuration of the offset and mutually opposite saddle-shaped portions that accommodate it.

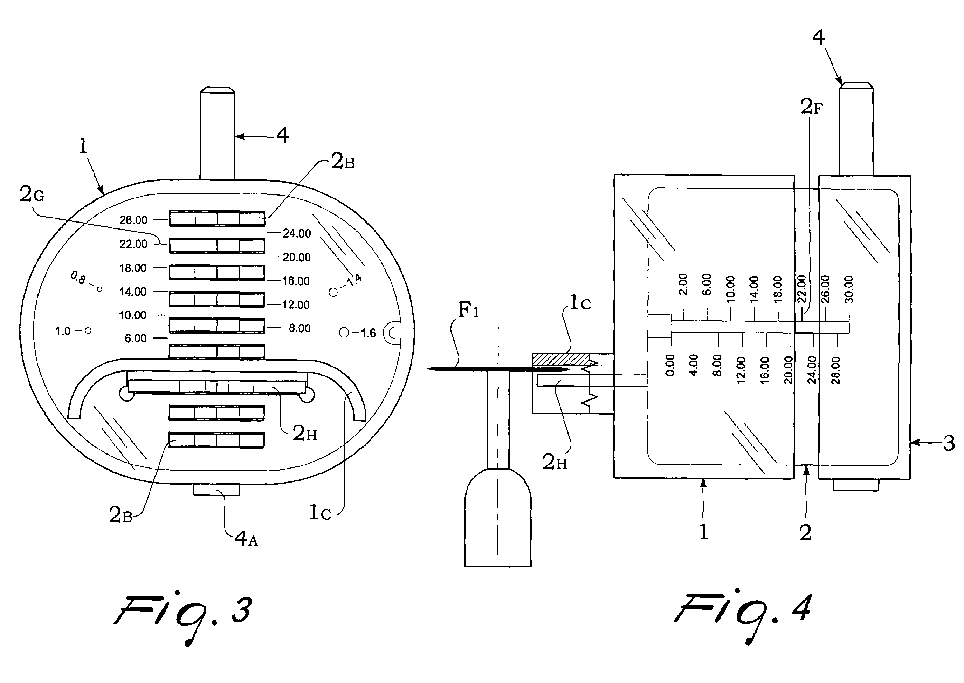

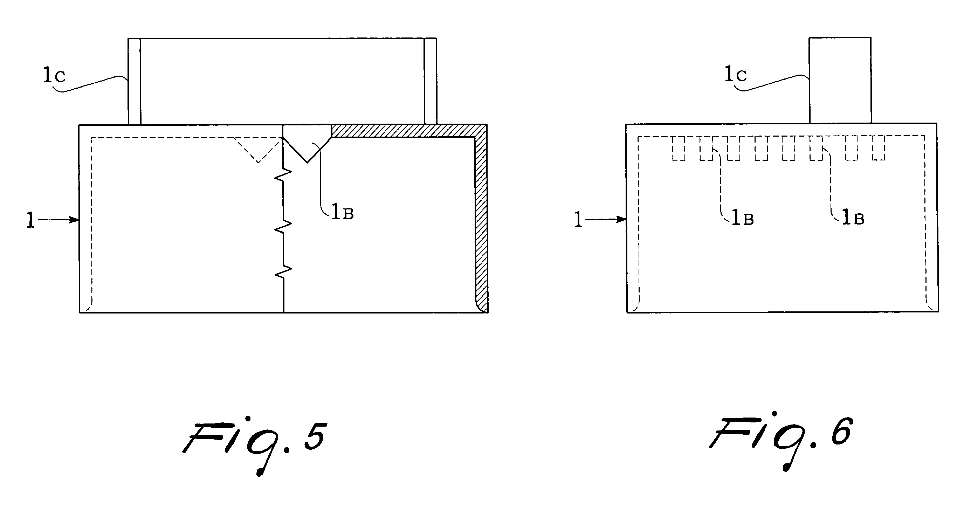

Continuing with the examination of the embodiment of Figures 1-13, it can be seen that the cup 2 is closed downward by its insertion in a tray or base 3, to which it is rigidly coupled by crossing both transversely, through respective pairs of holes 3A and 2C, by a hollow pin 4, which is closed at one end by a head 4A that is larger than the holes 3A and 2C and is provided with a plurality of transverse holes 4B through which, after connecting the hollow pin 4 to a known type of suction system, it is possible to eliminate the dust and other residues generated by the cutting operation.

A plurality of holes 2D are provided on the bottom of the cup 2, are identified by the indication of their respective diameters and allow to measure the diameters of the pins by means of simple test insertions.

A groove 2E faces the same bottom of the cup 2 and, by being arranged vertically along the lateral surface of said cup and being appropriately flanked by a graduated scale 2F, allows to measure the dimensions of the dental probe on the basis of which each dental pin is to be cut to the needed length.

Depending on such length, each pin P is positioned between the protrusions 2B in relation to the graduated scale 2G provided on the bottom of the cup 2 and in which the hypothetical zero value is at the cut of the cutter F 1.

A vertical shield 1C protrudes upward from the bottom of the cup 1 and is designed to protect from the circular cutter F 1 the fingers of the operator that clamp the two horizontal end faces of the device during the cutting of the pin P. The shield 1C in fact runs along the rear edge of the opening 1D from which two symmetrical and coplanar wings 2H protrude upward adjacent to the front edge; said wings rise vertically from the bottom of the cup 2 so as to center the circular cutter F1, guiding the descent of its stem along the slot that separates the two wings.

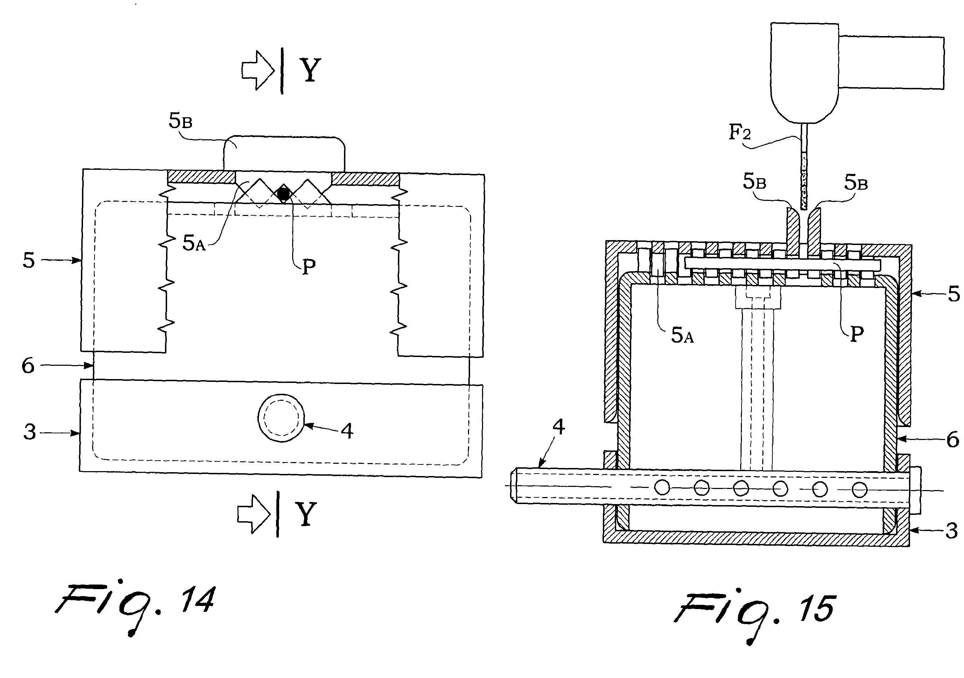

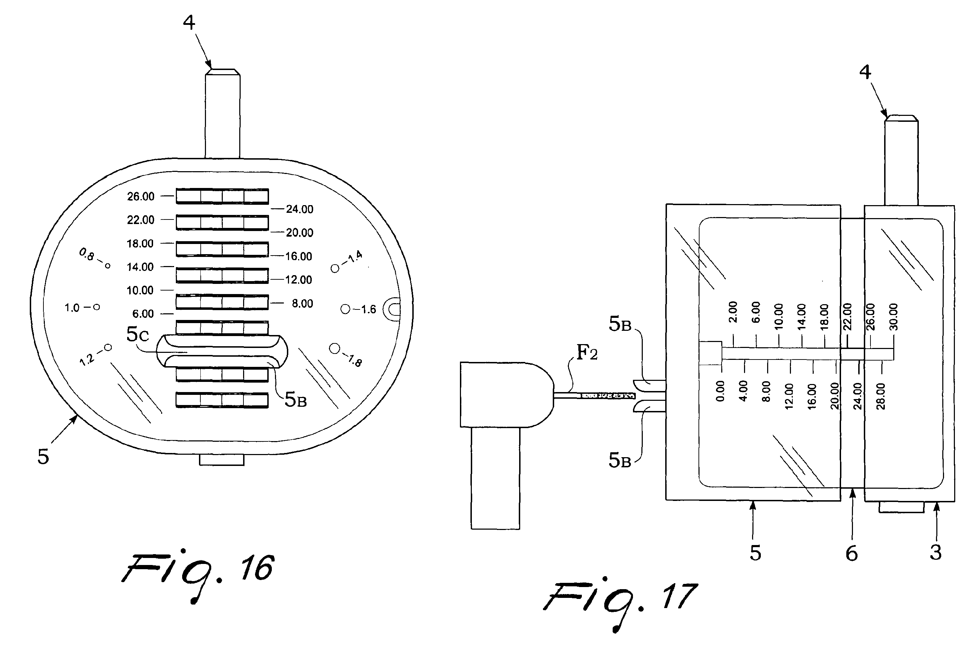

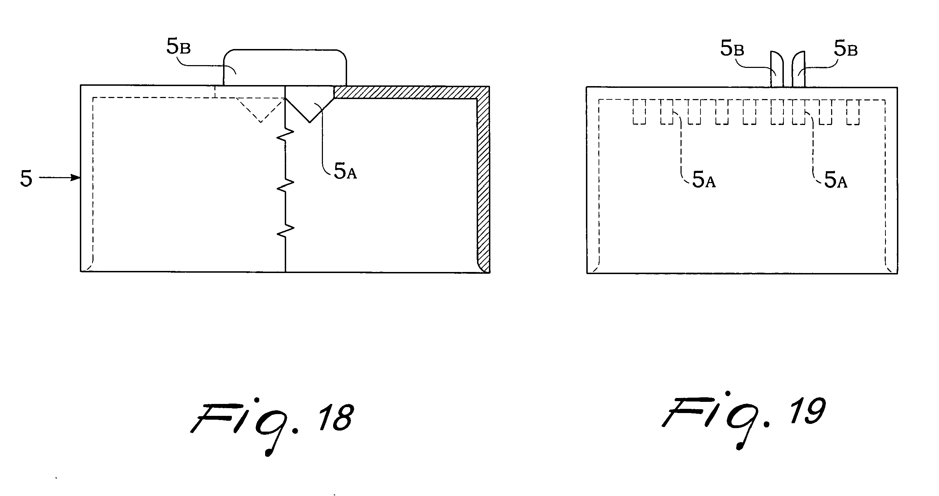

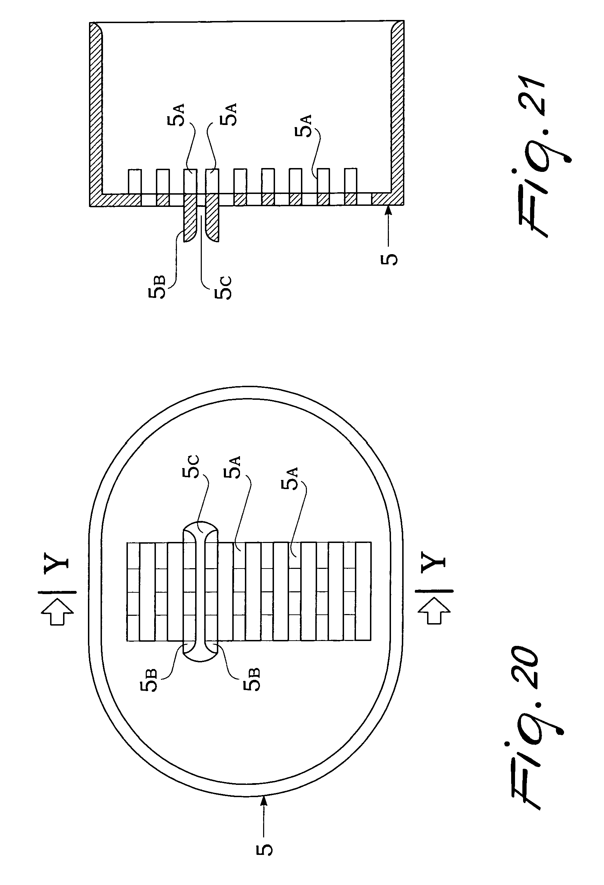

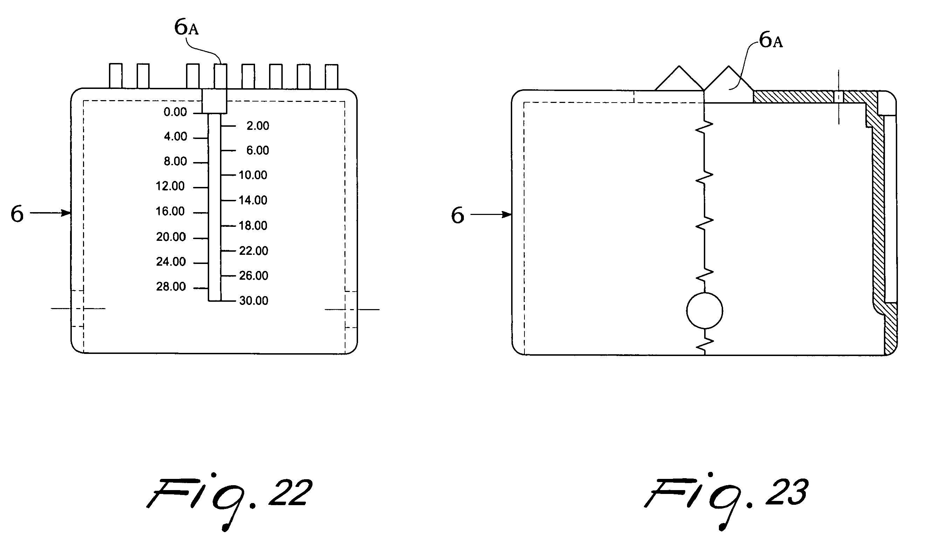

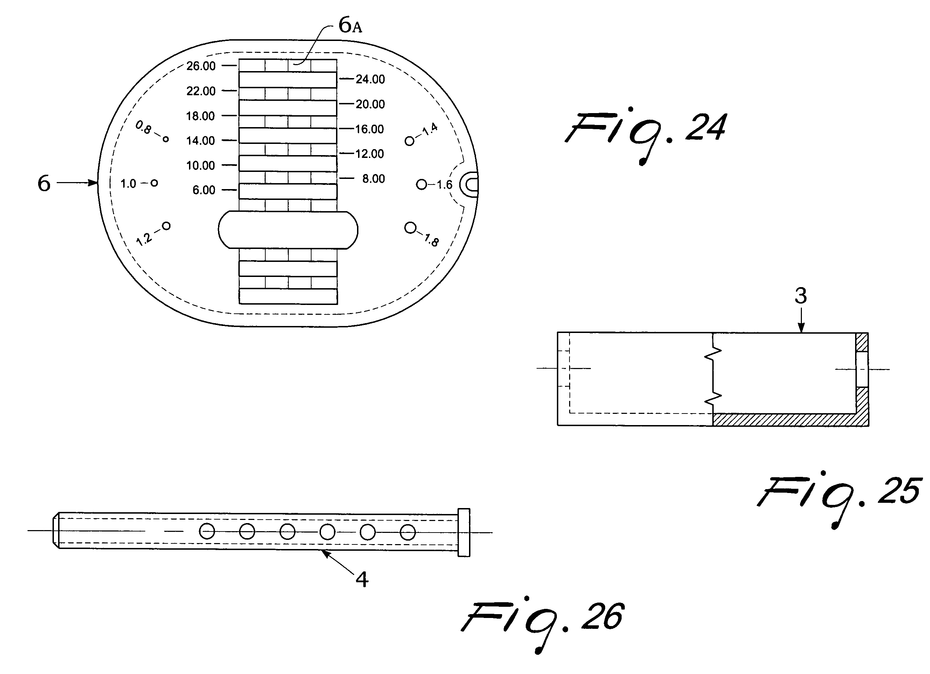

Differently from the embodiment of Figures 1-13 for cutting dental pins with a known type of circular cutter F1, the embodiment shown in Figures 14-26 is intended for cutting said dental pins by means of a known type of cylindrical cutter F2 (Figures 15 and 17) and differs from the previous version only because two vertical and parallel wings 5B rise from the bottom of the upper cup 5, at two pairs of protrusions 5A that protrude downward so as to form the saddle-shaped portions that clamp the pin P with pairs of protrusions 6A that protrude upward from a lower cup 6, said wings forming a gap 5C that faces the underlying pin P and acting as a guide for the cylindrical cutter F2 during its movement transversely to the pin P to be cut.

Since this embodiment is derived from the preceding embodiment, the tray or base 3 and the perforated pin 4, i.e., the elements that have been left unchanged, are designated by the same reference numerals as in the first version.

Without altering the main characteristic of the invention, which is to allow precision cutting of dental pins by clamping them between two cup-shaped elements which also act as a guide for the cutting element, the embodiments that follow have further refinements, some of which tend to make it easier to position the pin to be cut, while others tend to allow rapid adaptation of the root canal instruments according to the lengths detected by a known type of endodontic probe.

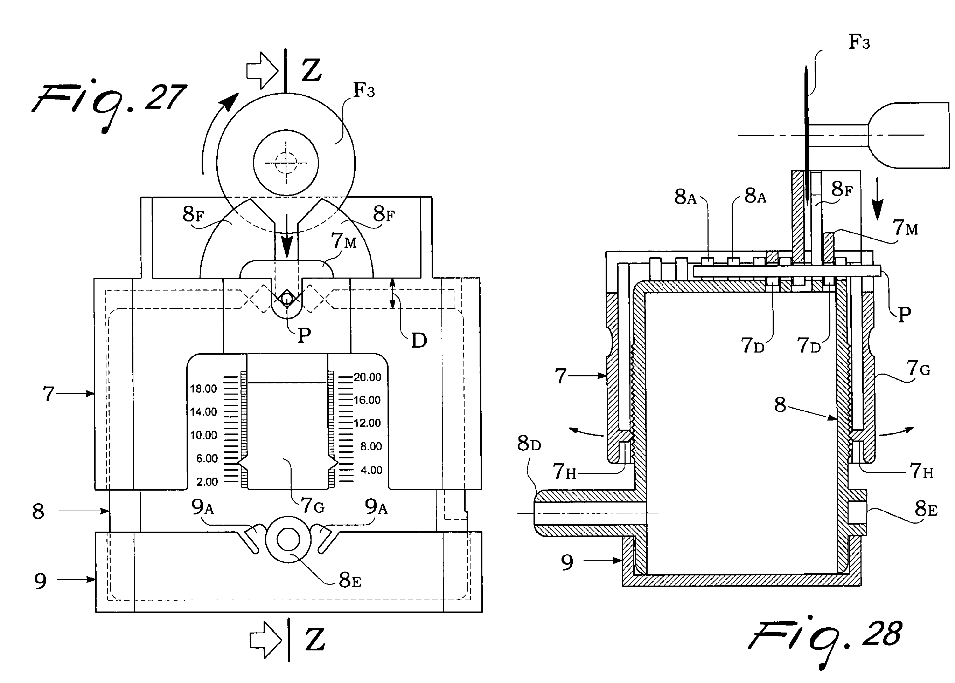

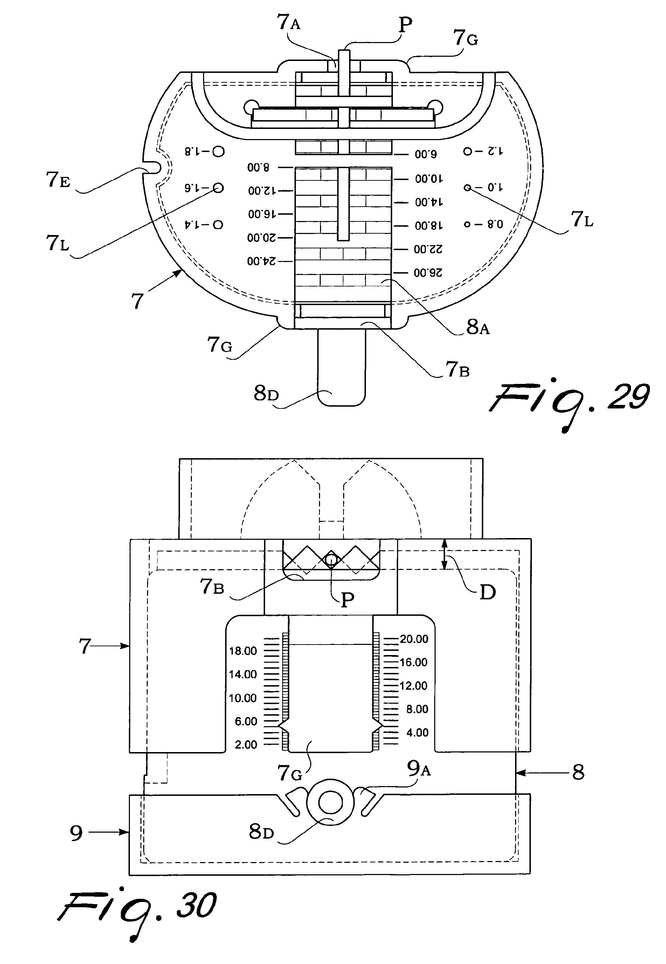

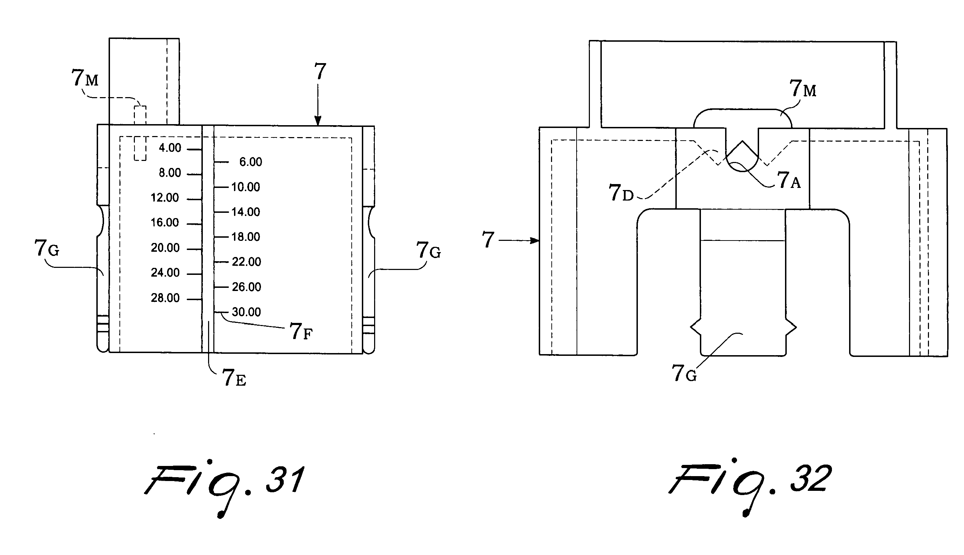

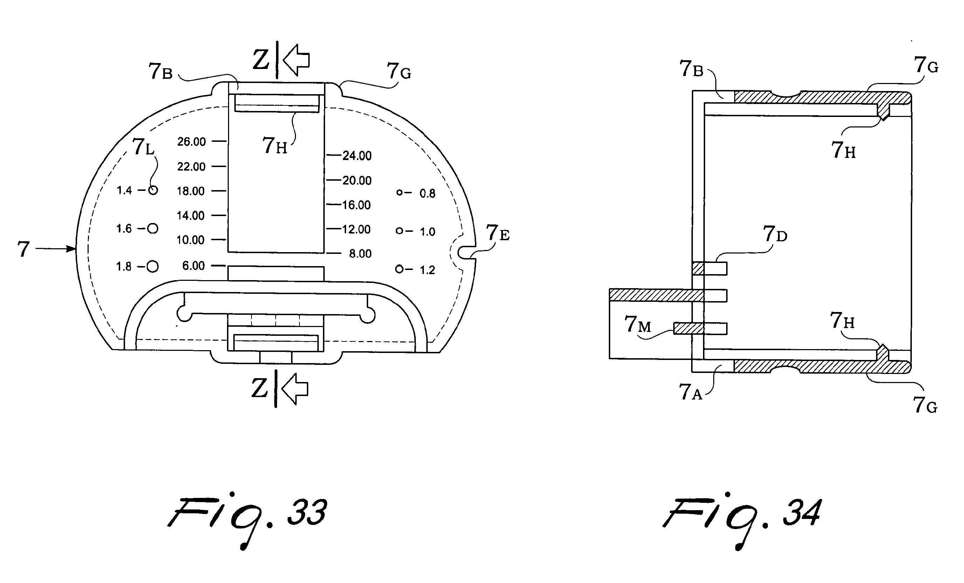

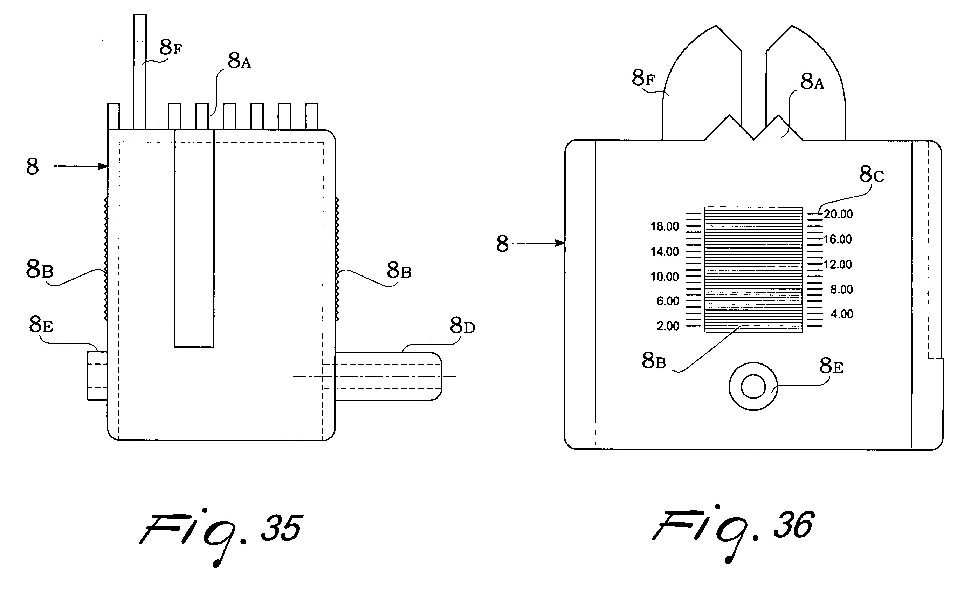

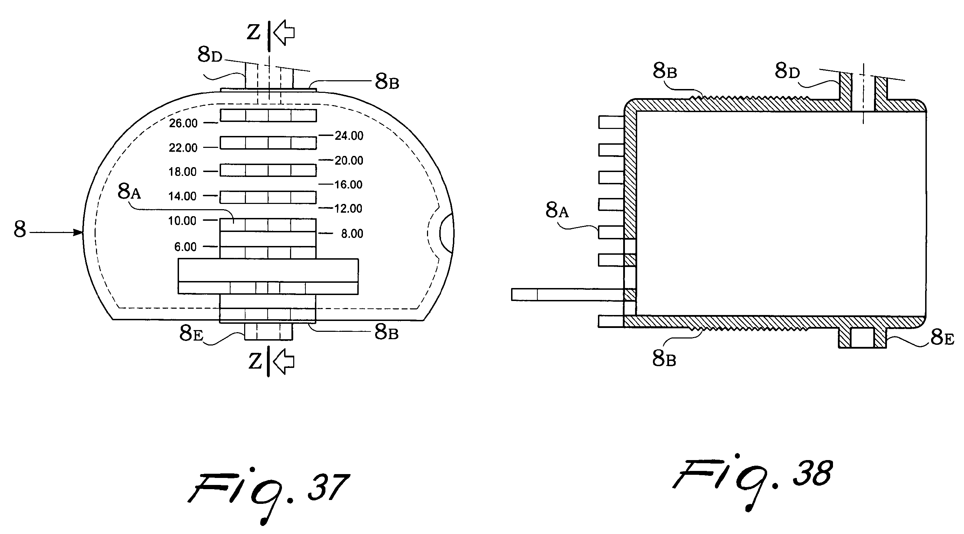

According to the embodiment of Figures 27-38, cutouts 7A and 7B are located in the front side and in the rear side of an upper cup 7 (Figures 30 and 32) and both descend from the flat bottom of said cup below the clamping region of the pin P, so that said pin, if necessary, can be inserted correctly between the cups 7 and 8 and can also be picked up after cutting without ever removing the upper cup 7 from the underlying cup 8. In this circumstance, it should be noted that a small number of alternating pairs of protrusions 7D and 8A (in theory, two on one side and one on the other side, interposed between the first two) is enough to firmly clamp the pin P to be cut, regardless of whether its cross-section is uniform or not.

Since the embodiment thus modified allows the pin P to be cut to also protrude on two opposite sides of the device, preference was given to exploiting this prerogative by reducing the dimensions of the device toward its front side, so that it is also possible to use any circular cutters F3 that have a short stem. This refinement is clearly shown in Figures 27, 28 and 31-34, which also show that a protrusion 7M protrudes upward from the bottom of the cup 7, at two protrusions 7D that protrude downward, and is arranged adjacent to two symmetrical and coplanar wings 8F, which are separated by a gap that guides the descent of the shank of the circular cutter F3 until it encounters the protrusion 7M.

Continuing with the examination of the device shown in drawings 9-10-11-12, in one side of the upper cup 7 there is externally a groove 7E, which is flanked by a graduated scale 7F which, starting from the upper edge of the cup, allows to determine the length of the endodontic probe that rests on the bottom of said cup after each measurement.

In flat regions of two opposite sides of the upper cup 7, preferably at the front and at the rear, two flexible tabs 7G are cut so as to protrude downward; each one of the tabs has its own tooth 7H to be engaged in the cup 8 or in the horizontal grooves of a corresponding knurled portion 8B that is flanked by a graduated scale 8C, by way of which the cups 7 and 8 are mutually positioned with a difference in elevation "D" (Figures 27 and 30) that is already determined by means of the measurement of the endodontic probe in the groove 7E. Therefore, once this positioning has been performed, it is possible to use any one of the through holes 7L of the upper cup 7, which are moreover used to check the diameter of the pins, in order to adapt in terms of length each individual root canal instrument, since the measurement indicated by the indices of the tabs 7G on the graduated scales 8C of the cup 8 corresponds to the distance "D" of Figures 27 and 30, i.e., to the difference in elevation between the bottoms of the two cups.

It should be noted that each one of the two flexible tabs 7G, in addition to having two vertical edges that are contoured so as to form two mutually opposite cusp-shaped indices, is arranged between two symmetrical openings that are wide enough to allow easy reading of the graduated scale of the underlying cup 8 even if the material that is used is not transparent.

Continuing with the examination of the embodiment of Figures 27-38, it can be seen that the cup 8 is closed in a lower region by insertion in a tray or base 9 provided with two pairs of flexible tabs 9A, which are adapted to engage elastically cylindrical protrusions 8D and 8E, the first of which is hollow for connection, by means of a flexible tube, to a system for aspirating the dust and small fragments generated during the cutting of the pins.

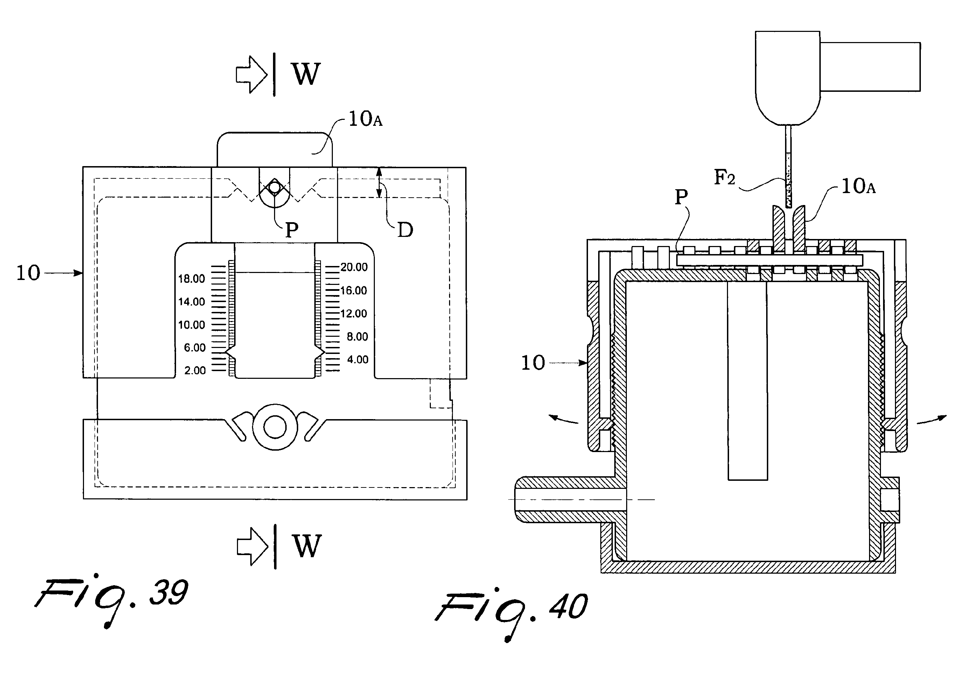

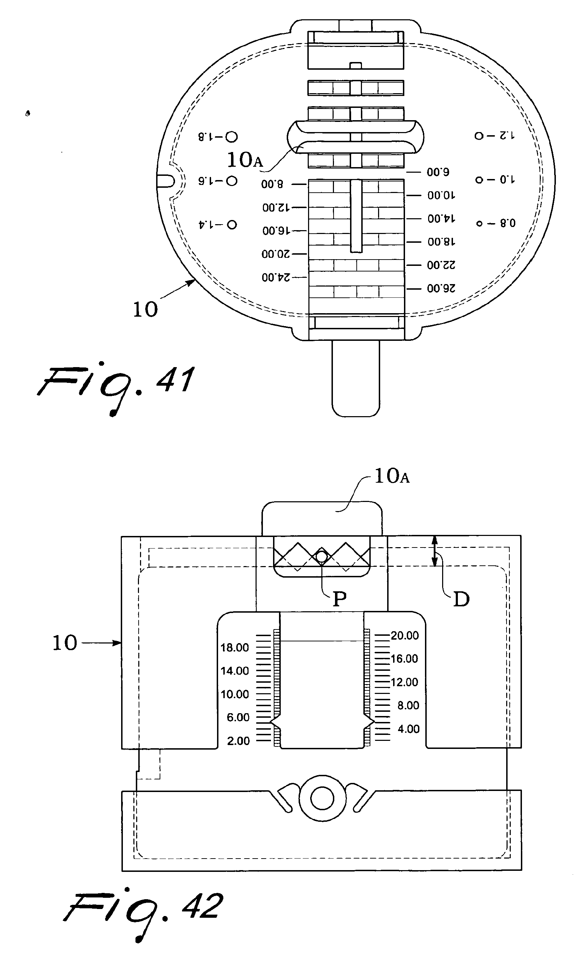

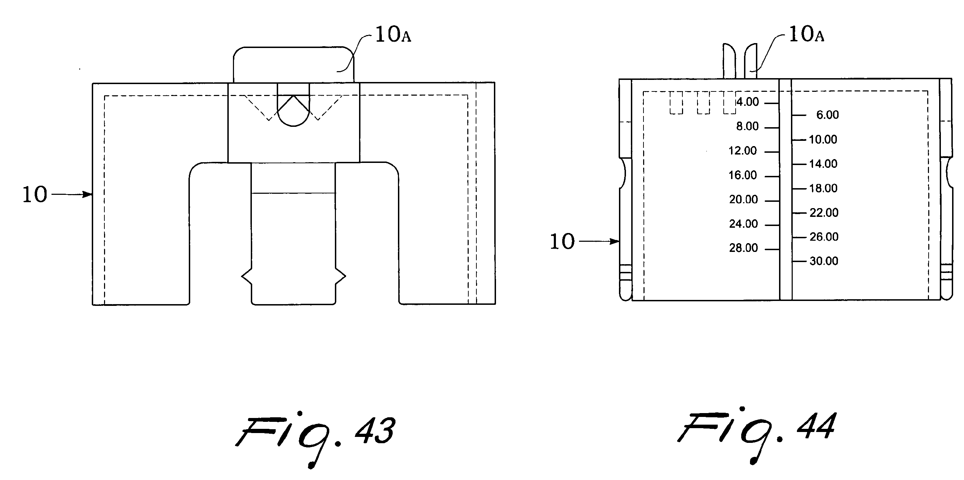

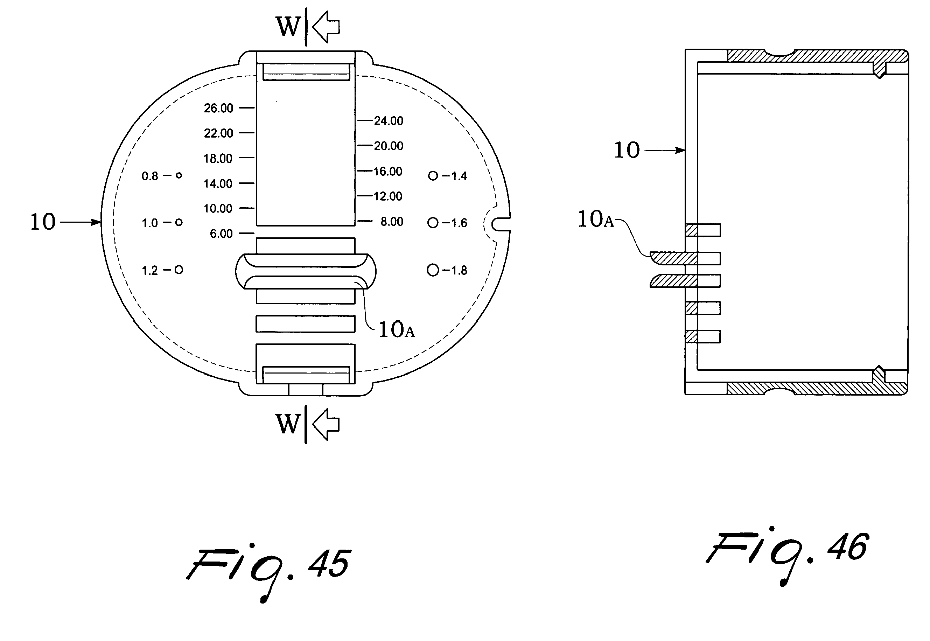

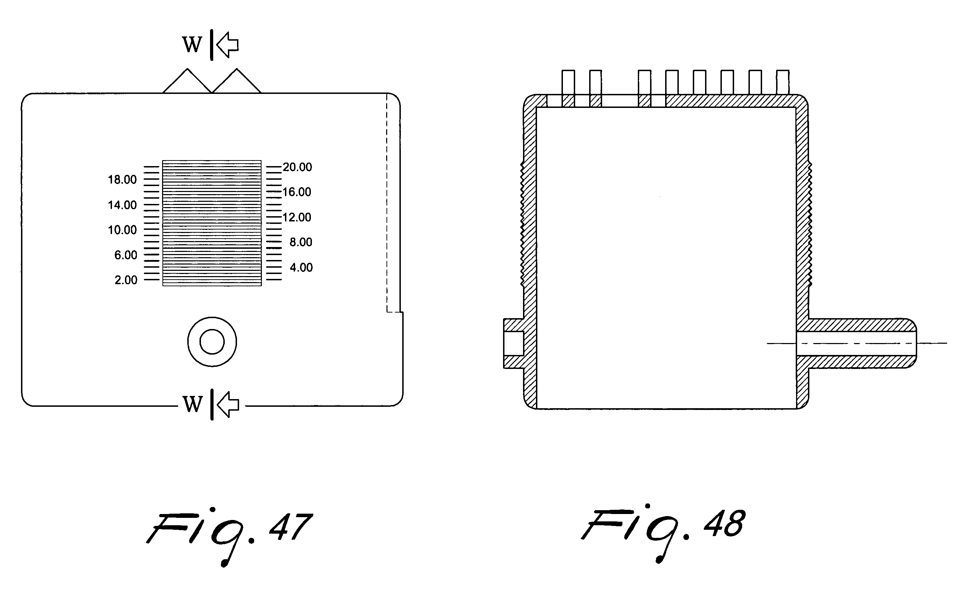

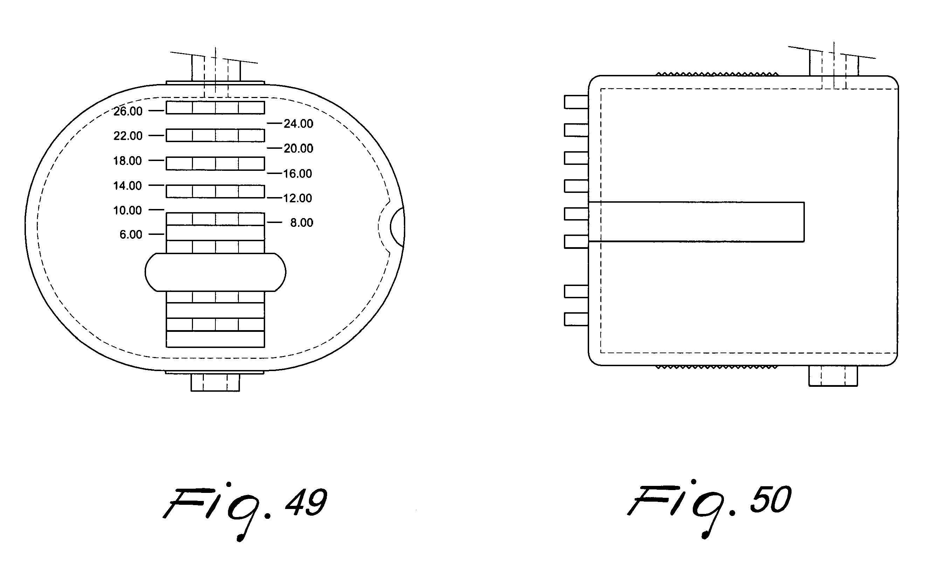

The embodiment shown in Figures 39-50, intended for cutting dental pins P by means of a known type of cylindrical cutter F2, differs from the preceding one mainly because of two vertical and parallel wings 10A, which protrude from an upper cup 10 and guide the cutting element F2 that sides between them.

The use of transparent plastic material to provide even just partially some of the embodiments shown allows to view the graduated scales that would be otherwise concealed by assembly and most of all allows to check constantly, at least up to the cutting operation, that the pin is retained in the set configuration.

For the very purpose of insuring the immobility of the pin in the chosen position, the mutually opposite saddle-shaped elements that clamp it are preferably knurled with two different orientations: in some saddle-shaped elements, they are knurled parallel to the pin, in order to prevent its rotation during cutting, and in other saddle-shaped elements they are knurled at right angles to the pin, in order to prevent it from performing longitudinal translational motions so as to obtain the preset size from the cutting operation.

However, it may also be preferred to preset in all the saddle-shaped elements a crossed knurling that has the prerogatives of both of the knurlings described above.

For the same purpose, it is also possible to resort to forming the surface where the pin rests in the saddle-shaped elements by using a layer of elastic or soft material that is optionally formed by co-molding, during the molding of the cups of the device, rigid and soft plastic materials.

Finally, without altering the general characteristics of the embodiments that have been described and illustrated, said embodiments might also be susceptible of further modifications and variations, which are in any case within the scope of the present patent and moreover might relate to the optional adoption of grilles or filters arranged at the output of the collection chamber and/or suction chamber in order to screen the residues of the cutting operation.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for facilitating precision cutting of dental pins, the measurement of endodontic dimensions and the consequent adaptation of root canal instruments, **characterized in that** it comprises at least three elements, one which is similar to an inverted cup that is closed downward by insertion in a tray or base in order to form a chamber for collecting and/or aspirating the cutting residues, is mostly inserted, in an upper region, in an additional inverted cup, the bottoms of said two cups being preset so that by arranging them mutually adjacent they can clamp and lock a dental pin that is arranged transversely with respect to cutouts provided in the two bottoms for the passage of a cutter, by means of which said pin can be cut to a chosen length, a graduated scale in which the zero value coincides with the cut of the cutter being reproduced thereon on one or both bottoms.

2. The device according to claim 1, **characterized in that** a plurality of pairs of teeth or protrusions protrude upward from the bottom of one of the inverted cups, the one that is closed in a lower region with a sort of tray or base so as to form a chamber for collecting and/or aspirating the cutting residues, said teeth or protrusions forming a corresponding number of aligned saddle-shaped portions in order to accommodate the dental pin to be fastened between these and other saddle-shaped portions, which are offset and mutually opposite since they are formed by similar pairs of teeth or protrusions that protrude downward from the bottom of the other inverted cup fitted over the first one, suitable openings or cutouts being provided in the bottom of each one of said two cups and allowing the passage of the pairs of teeth or protrusions of the other cup during insertion of one cup in the other until the dental pin to be cut is clamped.

3. The device according to claim 1, **characterized in that** the tray or base (3) and the inverted cup with which it forms the chamber for collecting and/or aspirating the cutting residues are mutually joined by a hollow pin (4), which crosses both transversely and is closed at one end by a head (4A) that prevents its accidental disengagement and has a plurality of transverse holes (4B), through which, after connecting the end that lies opposite the end provided with the head (4A) to a suction system, it is possible to eliminate the dust and other residues generated by the cutting operation.

4. The device according to the preceding claims, **characterized in that** on the bottom of one of the two inverted cups, the one that forms with the tray or base (3) the chamber for collecting and/or aspirating the cutting residues, there is a graduated scale, in which the zero value coincides with the cut of the cutter in order to position the dental pin according to the length to be obtained with the cutting operation, and there are a plurality of holes, which are identified by the indication of their respective diameters and allow to rapidly test the diameter of the dental pin to be cut.

5. The device according to the preceding claims, **characterized in that** a groove is formed on the outside of one of the two inverted cups, the one closed by a tray or base (3) in order to form the chamber for collecting and/or aspirating the cutting residues, said groove running from the bottom of the cup and at right angles thereto along the wall of said cup and being flanked by a graduated scale in order to allow measurement of the dimensions of the dental probe on the basis of which each dental pin is to be cut to the necessary length.

6. The device according to the preceding claims, **characterized in that** a protective shield (1C) protrudes vertically upward from the bottom of the cup (1), its central portion coinciding with the rear edge of an opening (1D) from which two symmetrical and coplanar wings (2H) protrude and rise vertically from the bottom of the cup (2) so as to shield, together with the shield (1C), a circular cutter (F1) the shank of which, during the cutting of the dental pin, descends along the slot that separates said wings and ensures centering of the cutter.

7. The device according to claims 1 to 5, **characterized in that** two parallel wings (5B) protrude vertically upward from the bottom of the upper cup (5) and at two pairs of protrusions (5A) that protrude downward so as to clamp the pivot (P), said wings forming a gap (5C), which, by facing the underlying dental pin to be cut, acts as a guide for the cylindrical cutter (F2) during movement transversely to said pin.

8. The device according to claims 1 and 2, **characterized in that** cutouts (7A and 7B) are provided in the front side and in the rear side of the upper inverted cup (7) and both descend from the flat bottom of said cup below the clamping region of the pin (P), so that said pin, if necessary, can be inserted correctly between the inverted cups (7, 8) and also picked up after cutting without ever removing the upper cup (7) from the underlying cup (8).

9. The device according to claim 8, **characterized in that** a protrusion (7M) protrudes upward from the bottom of the inverted upper cup (7) at a pair of protrusions (7D) that protrude downward, said protrusion being adjacent to two symmetrical and coplanar wings (8F), which are separated by a gap that guides the descent of the shank of a circular cutter (F3) until it encounters said protrusion (7M).

10. The device according to claims 8 and 9, **characterized in that** a groove (7E) is provided in one side of the upper inverted cup (7) and runs from the bottom of the cup, at right angles thereto, along the wall of said cup and is flanked by a graduated scale (7F) to allow, even when the assembly is assembled, to measure the dimensions acquired with the dental probe and on the basis of which each dental pin is to be cut to the necessary length.

11. The device according to claims 8, 9 and 10, **characterized in that** two flexible tabs (7G) are cut so as to protrude downward in flat regions of two opposite sides of the upper inverted cup (7), each tab being provided with a tooth (7H) of its own to be engaged in the lower inverted cup (8) or in the horizontal grooves of a corresponding knurled portion (8B) that is flanked by a graduated scale (8C), by way of which the inverted cups (7, 8) are mutually positioned with a difference in elevation (D) that is already determined by means of the measurement of the dental probe in said groove (7E).

12. The device according to claim 11, **characterized in that** each one of the two flexible tabs (7G), in addition to having two vertical edges that are contoured so as to form two mutually opposite cusp-shaped indices, is arranged between two symmetrical openings that are wide enough to allow easy reading of the graduated scale of the underlying cup (8) even if the material that is used is not transparent.

13. The device according to claims 8 to 12, **characterized in that** the inverted cup (8) is closed in a lower region by insertion in a tray or base (9), which is provided with two pairs of flexible tabs (9A), which are suitable to engage elastically cylindrical protrusions (8D, 8E), at least one of which is hollow in order to connect the chamber for collecting and/or aspirating the cutting residues to a suction system of a known type.
